# EUROPEAN PATENT SPECIFICATION

(11) **EP 0 818 407 B1**
(45) Date of publication and mention of the grant of the patent: **12.03.2003**
(21) Application number: 97107697.1
(22) Date of filing: 12.05.1997
(51) Int. Cl.: B65G 49/08, F27D 3/12

(54) **Improved trolly for storing and transferring ceramic products among processing stations**
Wagentransportvorrichtung zum Lagern und Übertragen von keramischen Gegenständen durch eine Reihe von Arbeitsstationen
Chariot pour le stockage et le transfert d'articles en céramique entre stations de travail

(30) Priority: 17.05.1996 IT MO960014 U
(43) Date of publication of application: 14.01.1998
(73) Proprietor: GRUPPO BARBIERI & TAROZZI S.r.l., 41043 Formigine (Modena) (IT)
(72) Inventor: Tarozzi, Fausto, 41043 Formigine (Prov. of Modena) (IT)
(74) Representative: Reniero, Cirillo Silvano

(56) References cited:
- WO-A-86/06051
- WO-A-92/02396
- DE-A- 3 320 737
- FR-A- 2 518 728
- GB-A- 1 318 576
- US-A- 2 173 682
- US-A- 2 974 374
- US-A- 4 427 379
- DATABASE WPI Section PQ, Week 8513 Derwent Publications Ltd., London, GB; Class Q36, AN 85-076227 XP002045964 & ES 8 501 109 A (TECNOFERRARI SPA) , 1 February 1985

## Description

The present invention relates to an improved trolley for storing and transferring ceramic products among processing stations.

Large trolleys have long been used, especially in the ceramics industry, to store and transfer products among the various stations in which they must be processed or packaged (see for example DE-A-3 320 737).

These conventional trolleys, which are usually and hereinafter known as "boxes", substantially consist of a footing provided with wheels which can be complemented by fixed feet, whereabove two side walls are welded or fixed by means of nuts and bolts, each side wall being crossed by substantially co-planar rows and columns of gauged holes in which corresponding free rollers are inserted; said rollers can be rotated when necessary in various manners, with the intervention of adapted machines, and form a plurality of parallel and superimposed planes whereon the products rest.

The possibility to rotate the rollers allows to automatically remove or insert the products on the planes of each box.

These conventional boxes, though having adequate functionality, have shown some drawbacks caused substantially by their considerable dimensions and weights.

Specifically, it has been observed that in particularly demanding conditions, or during normal movement on rails when said rails are not absolutely co-planar and have no adjustment means, the entire structure of the box undergoes warping, so that the necessary alignment between the side walls and accordingly between the rows and columns of holes formed therein is lost and the rollers supported between the holes, either by simply resting or with conventional centering and rotation means interposed, work in conditions which produce partial friction instead of being entirely free.

This problem must be avoided in particular when the boxes arrive at the machine which must move its rollers to load or unload the ceramic products: said machines in fact have arms which in turn have a plurality of rods adapted to be inserted snugly and automatically, with an approach maneuver, in the ends of the rollers to then turn them: therefore, the insertion is very difficult and the rollers, which are not aligned and are loaded with the weight of the material, offer considerable resistance to rotation.

A principal aim of the present invention is to solve the above problems of the prior art by providing an improved trolley for storing and transferring ceramic products among processing stations which is free from any kind of deformation, regardless of its operating conditions, and can also be stacked easily for storage without requiring wide spaces.

This aim and other objects are achieved by an improved trolley for storing and transferring ceramic products among processing stations, composed of a footing and of two flat vertical side walls rising therefrom, said walls being affected by rows and columns of holes for the insertion and resting of corresponding freely rotating rollers, characterized in that each of said side walls monolithically forms means for resting on the ground, wheel means which self-center during the translatory motion of the trolley on rails, and means which self-center during the lifting of the trolley with conventional lifting devices, said footing being constituted by at least one pair of longitudinal members for connecting the side walls, with mutual centering elements interposed, a flat covering and stiffening top being installable above said side walls.

Further characteristics and advantages of the present invention will become apparent from the following detailed description of a preferred embodiment of an improved trolley for storing and transferring ceramic products among processing stations, illustrated only by way of non-limitative example in the accompanying drawings, wherein:
figure 1 is a front view of an improved trolley according to the present invention;
figure 2 is an enlarged-scale detail view of the means for centering the longitudinal members and the side walls with respect to each other;
figure 3 is a side view of the improved trolley according to the invention.

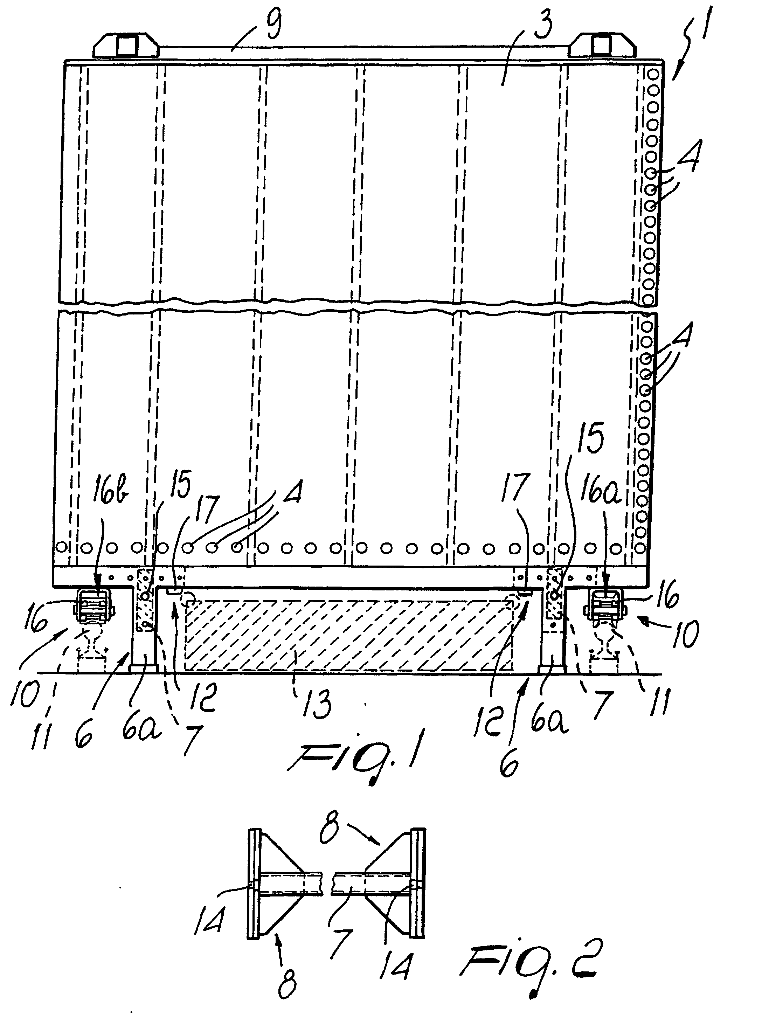

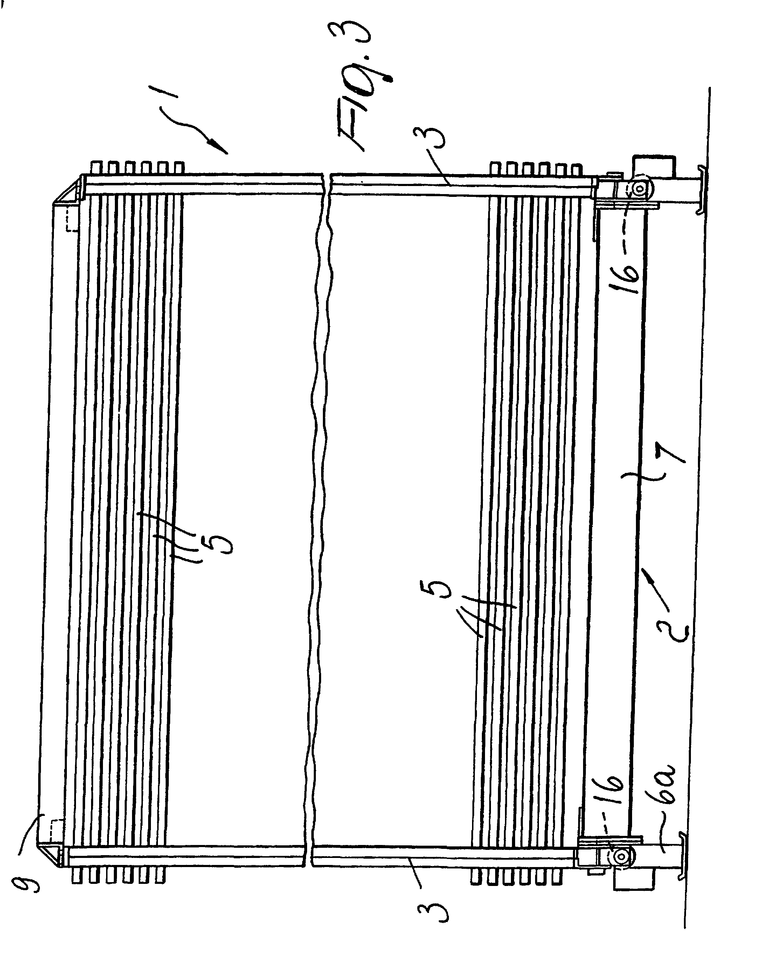

With particular reference to the above figures, the reference numeral 1 generally designates an improved trolley for storing and transferring ceramic products among the various processing stations.

The trolley 1 is substantially composed of a footing 2 and of two flat vertical side walls 3 rising from said footing and affected by rows and columns of holes 4 wherein corresponding freely rotating rollers 5 can be inserted and rested; more specifically, each one of the side walls 3 monolithically forms means 6 for resting on the ground and the footing 2 is constituted by a simple pair of longitudinal members 7 adapted to join to each other two side walls 3 so that they face each other and are parallel.

Mutual centering means 8 are interposed between the ends of the longitudinal members 7 and the side walls 3, and in an upward region there is provided a detachable flat top 9 for covering and stiffening the structure formed by assembling the longitudinal members 7 and the side walls 3 with respect to each other. Each of said side walls, in its lower part, is provided not only with the ground resting means 6 but also with wheel means 10 which self-center when the trolley 1 is moved on rails 11 and with elements 12 which self-center when the trolley 1 is raised by conventional lifting means, schematically designated by the reference numeral 13.

The ground resting means 6 are constituted by at least one pair of feet 6a formed monolithically in each side wall 3 and slightly recessed with respect to the outer edges of said side walls.

The mutual centering means 8 are constituted by corresponding pins 14 which protrude from the heads of the longitudinal members 7 and can be inserted snugly in corresponding gauged holes 15 formed in the lower region of each side wall 3, below the first horizontal row of holes 4, and formed at the vertical axes of the feet 6a.

The self-centering elements 10 for the movement of the trolley 1 on the rails 11 are constituted by corresponding pairs of wheels 16 which are supported in a downward region by the side walls 3 between the lateral edges and the feet 6a: of these wheels, the matching wheels 16 of the side walls 3 are shaped so as to have a groove 16a the width whereof mates snugly with the head of a rail 11 and the corresponding opposite wheels are shaped so as to have a wide groove 16b in order to provide a loose coupling to the head of the corresponding rail 11.

Finally, the self-centering elements 12 are constituted by pairs of wedges 17 wherein the taper causes them to converge with respect to each other, and are formed so as to protrude monolithically on the lower part of each side wall 3 inside the feet 6a.

Operation of the invention is as follows: each trolley 1 is assembled as required by connecting to each other a pair of side walls 3 and a pair of longitudinal members 7 of appropriate length according to the storage and transfer capacity which the trolley must have.

During assembly, the pins 14 are inserted in the corresponding gauged holes 15 to provide perfect alignment among the components of the structure.

The covering and stiffening top 9 is also assembled in an upward region.

Each side wall 3 forms the feet 6a, which are obtained monolithically therewith, and is provided with pairs of wheels 16 before the trolley 1 is assembled.

Of these wheel pairs, one is affected by a centered groove 16a the transverse width whereof is such that it couples snugly with the head of a corresponding rail 11 whereon it must rest and the other wheel pair is affected by a groove 16b the transverse width whereof is slightly larger than the head of the rail 11 whereon it must rest: once the trolley 1 has been assembled so as to place the wheels with grooves 16a and 16b on corresponding sides, this allows to absorb and automatically compensate transversely any misalignments among the rails 11, thus eliminating any stress which might discharge onto the structure of the trolley 1, producing unwanted warping on said structure: moreover, since the wheels are applied directly to the side walls 3, they directly receive the load lying on them and caused by the set of rollers 5 without eccentricity, which would cause moment-stress flexing, and the gap which remains between the wheels and the walking surface allows to use rails 11 provided with micrometric vertical adjustment means adapted to eliminate any misalignment thereof.

The pairs of wedges 17 are also provided between the feet 6a; when the trolley 1 is raised with conventional lifting means 13, said wedges are adapted to snugly couple to the rests with which said means are usually provided, thus eliminating, even in this configuration for the movement of the trolley 1, any stresses to the structure which cause the onset of warping.

Last but not least, the possibility to assemble the improved trolley allows, as mentioned, both to choose its dimensions according to each user's requirements and to store its disassembled components in a relatively limited space.

It has thus been observed that the described invention achieves the intended aim and objects.

The invention thus conceived is susceptible of modifications and variations within the scope of the invention as defined in the claims.

In the practical embodiment of the invention, the materials employed, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An improved trolley for storing and transferring ceramic products among processing stations, composed of a footing (2) and of two flat vertical side walls (3) rising therefrom, said walls being affected by rows and columns of holes (4) for the insertion and resting of corresponding freely rotating rollers (5), **characterized in that** each of said side wall (3) monolithically forms means (6) for resting on the ground, wheel means (10) which self-center during the translatory motion of the trolley (1) on rails (11), and means (12) which self-center during the lifting of the trolley with conventional lifting means (13), said footing (2) being constituted by at least one pair of longitudinal members (7) for connecting the side walls (3), with mutual centering means (8) interposed, a flat covering and stiffening top (9) being installable above the side walls (3).

2. An improved trolley according to claim 1, **characterized in that** said ground resting means (6) are constituted by at least one pair of feet (6a) which are formed monolithically in each side wall (3) and are slightly recessed with respect to the outer edges of the side walls (3).

3. An improved trolley according to claim 1, **characterized in that** said mutual centering means are constituted by corresponding pins (14) which protrude from the ends of the longitudinal members (7) and can be snugly inserted in corresponding gauged holes (15) formed in the lower region of each side wall (3) below the first horizontal row of holes (4).

4. An improved trolley according to claims 1, 2 and 3, **characterized in that** said gauged holes (15) are formed at the vertical axes of the feet (6a).

5. An improved trolley according to claim 1, **characterized in that** said self-centering wheel means (10) for movement on rails (11) are constituted by corresponding pairs of wheels (16) supported in a downward region by the side walls (3) between the lateral edges and the feet (6a), the corresponding wheels (16) on identical sides of side walls being shaped so as to have grooves (16a) the width whereof couples snugly with the head of one rail (11), the corresponding opposite wheels (16) being shaped so as to have a wide groove (16b) for loose coupling to the head of the corresponding rail (11).

6. An improved trolley according to claims 2 and 5, **characterized in that** said feet (6a) are taller than the overall height of the wheels (16).

7. An improved trolley according to claim 1, **characterized in that** said self-centering elements (12) are constituted by pairs of wedges (17) which taper so as to converge with respect to each other and are formed so as to protrude monolithically on the lower part of each side wall (3) between said feet (6a).

## Patentansprüche

1. Verbesserter Schienenwagen zum Lagern und Transportieren keramischer Produkte zwischen Verarbeitungsstationen, bestehend aus einem Boden (2) und zwei ebenflächigen vertikalen Seitenwänden (3), die sich von diesem aus erheben, wobei die Seitenwände Reihen und Säulen von Löchern (4) für das Einstecken und Lagern von korrespondierenden frei drehbaren Rollen (5) aufweisen, **dadurch gekennzeichnet dass** beide Seitenwände (3) einstückig mit Mitteln (6) für das Stehen auf dem Boden ausgebildet sind, Radmitteln (10), die sich selbst während der Fahrbewegung des Schienenwagens (1) auf Schienen (11) zentrieren, sowie Mitteln (12), die sich während des Anhebens des Schienenwagens mit konventionellen Hebemitteln (13) selbst zentrieren, wobei der Boden (2) aus wenigstens einem Paar Längsgliedern (7) besteht, die die Seitenwände (3) zu verbinden, wobei gegenseitige Zentriermittel (8) dazwischen angeordnet sind, einem flachen bedeckenden und versteifendem Dach (9), das über den Seitenwänden (3) anzuordnen ist.

2. Verbesserter Schienenwagen nach Anspruch 1, **dadurch gekennzeichnet, dass** die Mittel (6) um auf dem Boden zu stehen aus wenigstens einem Paar Füßen (6a) bestehen, die einstückig mit beiden Seitenwänden (3) ausgebildet sind und hinter den Außenkanten der Seitenwände (3) leicht zurückstehen.

3. Verbesserter Schienenwagen nach Anspruch 1, **dadurch gekennzeichnet, dass** die gegenseitigen Zentriermittel aus korrespondierenden Bolzen (14) bestehen, die von den Enden der Längsglieder (7) vorstehen und so ausgebildet sind, dass sie eng in korrespondierend kalibrierte Löcher (15) in dem unteren Abschnitt beider Seitenwände (3) unterhalb der ersten horizontalen Reihe von Löchern gesteckt werden.

4. Verbesserter Schienenwagen nach Anspruch 1, 2 und 3, **dadurch gekennzeichnet, dass** die kalibrierten Löcher (15) als Vertikalachsen der Füße (6a) ausgebildet sind.

5. Verbesserter Schienenwagen nach Anspruch 1, **dadurch gekennzeichnet, dass** die sich selbst zentrierenden Räder (10) für die Bewegung auf Schienen (11) aus korrespondierenden Radpaaren (16) bestehen, die an einem unteren Bereich von den Seitenwänden (3) zwischen den seitlichen Rändern und den Füßen (6a) gehalten werden, wobei die korrespondierenden Räder (16) auf identischen Seiten der Seitenwände so ausgebildet sind, dass sie Führungsnuten (16a) besitzen, deren Breite sich eng an den Kopf einer Schiene (11) anlegt, wobei die korrespondierenden gegenüber liegenden Räder (16) so ausgebildet sind, dass sie eine breite Führungsnut (16b) für die lose Verbindung mit dem Kopf der entsprechenden Schiene (11) bilden.

6. Verbesserter Schienenwagen nach den Ansprüchen 2 bis 5, **dadurch gekennzeichnet, dass** die Füße (6a) länger sind, als die Gesamthohe der Räder (16).

7. Verbesserter Schienenwagen nach Anspruch 1, **dadurch gekennzeichnet, dass** die sich selbst zentrierenden Mittel (12) durch Keilpaare (17) gebildet sind, die sich aufeinander zu verjüngen und so ausgebildet sind, dass sie einstückig aus dem unteren Abschnitt beider Seitenwände (3) zwischen den Füßen (6a) hervorspringen.

## Revendications

1. Chariot perfectionné pour emmagasiner et transporter des produits céramiques parmi des postes de traitement, comprenant une embase (2) et une paire de parois latérales verticales planaires (3) s'élevant depuis celle-ci, lesdites parois étant affectées par des lignes et des colonnes de trous (4) pour l'insertion et le placement de rouleaux (5) correspondants tournant librement, **caractérisé en ce que** chacune desdites parois latérales (3) forme de manière monolithe des moyens (6) de placement sur le sol, des moyens à roues (10) qui se centrent automatiquement durant le mouvement de translation du chariot (1) sur des rails (11) et des moyens (12) qui se centrent automatiquement à l'étape de levage du chariot avec des moyens de levage conventionnels (13), ladite embase (2) étant constituée par au moins une paire d'éléments longitudinaux (7) pour relier les parois latérales (3), avec des moyens de centrage mutuels (8) intercalés, un dessus plat de recouvrement et de renforcement (9) étant conçu pour être installé au-dessus des parois latérales (3).

2. Chariot perfectionné selon la revendication 1, **caractérisé en ce que** lesdits moyens de placement sur le sol (6) sont constitués par au moins une paire de pieds (6a) qui sont formés de manière monolithe dans chaque paroi latérale (3) et sont légèrement évidés par rapport aux bords extérieurs des parois latérales (3).

3. Chariot perfectionné selon la revendication 1, **caractérisé en ce que** lesdits moyens de centrage mutuel sont constitués par des broches correspondantes (14) qui dépassent des extrémités des éléments longitudinaux (7) et peuvent être insérées de manière ajustée dans des trous calibrés correspondants (15) formés dans la section inférieure de chaque paroi latérale (3) au-dessous de la première ligne horizontale de trous (4).

4. Chariot perfectionné selon les revendications 1, 2 et 3, **caractérisé en ce que** lesdits trous calibrés (15) sont formés aux axes verticaux des pieds (6a).

5. Chariot perfectionné selon la revendication 1, **caractérisé en ce que** lesdits moyens à roues à centrage automatique (10) pour le déplacement sur des rails (11) sont constitués par une paire correspondante de roues (16) supportées à une section inférieure par les parois latérales (3) entre les bords latéraux et les pieds (6a), les roues correspondantes (16) sur les mêmes côtés des parois latérales étant formées de façon à comporter des rainures (16a) dont la largeur s'accouple de manière ajustée avec le champignon d'un rail (11), les roues opposées correspondantes (16) étant formées de façon à comporter une rainure large (16b) pour un accouplement lâche avec le champignon du rail correspondant (11).

6. Chariot perfectionné selon les revendications 2 et 5, **caractérisé en ce que** lesdits pieds (6a) sont plus hauts que la hauteur globale desdites roues (16).

7. Chariot perfectionné selon la revendication 1, **caractérisé en ce que** lesdits éléments à centrage automatique (12) sont constitués par des paires de clavettes (17) qui s'effilent de façon à converger mutuellement et sont formés de façon à dépasser de manière monolithe à partir de la section inférieure de chaque paroi latérale (3) entre lesdits pieds (6a).
